# EUROPÄISCHE PATENTSCHRIFT

(11) **EP 2 960 737 B1**
(45) Veröffentlichungstag und Bekanntmachung des Hinweises auf die Patenterteilung: **06.05.2020**
(21) Anmeldenummer: 15160972.4
(22) Anmeldetag: 26.03.2015
(51) Int. Cl.: H04L 5/14, H04L 7/04, G05B 19/414

(54) **VORRICHTUNG UND VERFAHREN ZUM ERZEUGEN EINES TRIGGERSIGNALS IN EINER POSITIONSMESSEINRICHTUNG UND POSITIONSMESSEINRICHTUNG HIERZU**
DEVICE AND METHOD FOR GENERATING A TRIGGER SIGNAL IN A POSITION MEASURING DEVICE AND POSITION MEASUREMENT DEVICE
PROCÉDÉ ET DISPOSITIF DE GÉNÉRATION D'UN SIGNAL DE DÉCLENCHEMENT DANS UN DISPOSITIF DE MESURE DE POSITION ET DISPOSITIF DE MESURE DE POSITION ASSOCIÉ

(30) Priorität: 26.06.2014 DE 102014212288
(43) Veröffentlichungstag der Anmeldung: 30.12.2015
(73) Patentinhaber: Dr. Johannes Heidenhain GmbH, 83301 Traunreut (DE)
(72) Erfinder: Beaury, Bernhard, 83236 Übersee (DE); Kobler, Alexander, 84508 Burgkirchen (DE); Kreuzer, Stephan, 83362 Surberg-Ettendorf (DE); Mooshammer, Markus, 83278 Traunstein (DE); Walter, Michael, 84570 Polling (DE)

(56) Entgegenhaltungen:
- EP-A1- 0 660 209
- EP-A1- 2 570 931
- DE-A1-102008 027 902

## Beschreibung

### GEBIET DER TECHNIK

Die Erfindung betrifft ein Verfahren zum Erzeugen eines Triggersignals in einer Positionsmesseinrichtung nach Anspruch 1, sowie eine Vorrichtung zur Erzeugung eines Triggersignals in einer derartigen Positionsmesseinrichtung nach Anspruch 6.

### STAND DER TECHNIK

Positionsmesseinrichtungen werden in der Automatisierungstechnik dafür eingesetzt, bei geregelten Antrieben Lageistwerte zu ermitteln, die eine Folgeelektronik, beispielsweise eine numerische Steuerung, benötigt, um Sollwerte für Regelkreise zu berechnen, mit denen der Antrieb (z.B. Vorschub eines Werkzeugs oder eines Werkstückes) kontrolliert wird. Handelt es sich bei den Positionsmesseinrichtungen um Drehgeber oder Winkelmessgeräte, so sind diese hierzu beispielsweise direkt oder indirekt mit der Welle eines Motors gekoppelt. Längenmessgeräte messen beispielsweise lineare Bewegungen zwischen einem Maschinenbett und einem relativ zum Maschinenbett positionierbaren Maschinenteil, beispielsweise einem verfahrbaren Werkzeugschlitten.

Heutzutage kommen vorzugsweise absolute Positionsmesseinrichtungen zum Einsatz. Diese erzeugen absolute Messwerte, die über digitale, meist serielle Datenschnittstellen von der Positionsmesseinrichtung zur Folgeelektronik übertragen werden. Bei den Messwerten handelt es sich meist um Positionswerte (Winkelwerte oder lineare Positionen), es sind aber auch Positionsmesseinrichtungen bekannt, die Geschwindigkeits- oder Beschleunigungswerte liefern, also Messwerte, die die zeitliche Änderung von Positionen angeben.

Häufig besteht die Notwendigkeit, von der Folgeelektronik über die serielle Datenschnittstelle Ereignisse im Positionsmessgerät auslösen zu können. Dies gilt insbesondere für die Anforderung von Messwerten.

So beschreibt die EP 0 660 209 A1 eine Positionsmesseinrichtung mit einer synchron-seriellen Schnittstelle, d.h. einer Schnittstelle, bei der der zeitliche Ablauf der Datenübertragung auf einer (bidirektionalen) Datenleitung über ein Taktsignal gesteuert wird, das über eine separate Taktleitung zur Positionsmesseinrichtung geführt wird. Das Erfassen der Abtastwerte, die anschließend zu einem Positionswert verarbeitet werden, wird bei dieser Positionsmesseinrichtung durch die erste Flanke des Taktsignals ausgelöst, die gleichzeitig den Beginn einer Datenübertragung signalisiert. Die erste Flanke des Taktsignals dient somit als Triggersignal zur Erfassung der Abtastwerte und löst somit die Erzeugung eines Messwerts aus.

Diese Lösung ist nicht für serielle Schnittstellen anwendbar, die über keine Taktleitung verfügen. Außerdem kann es bei Positionsmesseinrichtungen mit sehr schneller Signalverarbeitungselektronik sein, dass der Messwert (Positionswert) eine gewisse Zeit früher vorliegt, als er nach den Regeln des Schnittstellenprotokolls zur Folgeelektronik übertragen werden kann. Aus der Sicht der Regelungstechnik entsteht so eine zusätzliche Totzeit (der Messwert ist also "veraltet"). Das bedeutet, wenn der Messwert bei der Folgeelektronik eintrifft, hat sich der der Antrieb bereits um eine gewisse Strecke, bzw. einen gewissen Winkel weiterbewegt. Dieses Problem kann durch mathematische Algorithmen (Extrapolation) minimiert werden, die umso besser funktionieren, je genauer der Zeitpunkt des Erfassens der Abtastwerte in der Positionsmesseinrichtung bekannt ist und je kürzer die Zeitspanne zwischen dem Zeitpunkt des Erfassens der Abtastwerte und dem Eintreffen des Messwerts bei der Folgeelektronik ist.

### ZUSAMMENFASSUNG DER ERFINDUNG

Der vorliegenden Erfindung liegt daher die Aufgabe zugrunde, ein verbessertes Verfahren zum Erzeugen eines präzisen Triggersignals in einer Positionsmesseinrichtung zu schaffen.

Diese Aufgabe wird durch ein Verfahren zum Erzeugen eines asynchronen Triggersignals nach Anspruch 1 gelöst.

Hier wird ein Verfahren zum Erzeugen eines asynchronen Triggersignals in einer Positionsmesseinrichtung, aufweisend eine Positionserfassungseinheit, eine Verarbeitungseinheit und eine Schnittstelleneinheit, wobei die Positionsmesseinrichtung über die Schnittstelleneinheit und einen bidirektionalen Datenübertragungskanal zum Zwecke der Kommunikation mit einer Folgeelektronik verbindbar ist, vorgeschlagen, das folgende Schritte aufweist:
- Generieren eines synchronen Datenstroms aus einem asynchronen Datenstrom, der aus Richtung der Folgeelektronik bei der Positionsmesseinrichtung eintrifft, durch Abtastung des asynchronen Datenstroms im zeitlichen Raster eines Arbeitstaktsignals,
- Generieren eines Torsignals bei Feststellung einer Freigabebedingung für die Ausgabe des Triggersignals durch Auswertung des synchronen Datenstroms und
- Erzeugen des Triggersignals bei Vorhandensein des Torsignals und bei Auftreten einer Signalflanke des asynchronen Datenstroms.

Weiter liegt der Erfindung die Aufgabe zugrunde, eine verbesserte Vorrichtung zum Erzeugen eines präzisen Triggersignals in einer Positionsmesseinrichtung zu schaffen.

Diese Aufgabe wird durch eine Vorrichtung zum Erzeugen eines asynchronen Triggersignals nach Anspruch 6 gelöst.

Es wird nun eine Vorrichtung zum Erzeugen eines asynchronen Triggersignals in einer Positionsmesseinrichtung, die eine Positionserfassungseinheit, eine Verarbeitungseinheit und eine Schnittstelleneinheit aufweist und die über die Schnittstelleneinheit und einen bidirektionalen Datenübertragungskanal zum Zwecke der Kommunikation mit einer Folgeelektronik verbindbar ist, vorgeschlagen. Die Vorrichtung umfasst eine Triggereinheit, der ein asynchroner Datenstrom von der Folgeelektronik und ein synchroner Datenstrom, der in einer Synchronisierungseinheit durch Abtastung des asynchronen Datenstroms im zeitlichen Raster eines Arbeitstaktsignals generierbar ist, zugeführt sind. Die Triggereinheit weist eine Auswerteeinheit auf, in der durch Auswertung des synchronen Datenstroms eine Freigabebedingung für die Ausgabe des Triggersignals feststellbar und ein Torsignal generierbar ist, sowie eine Triggersignal-Ausgabeeinheit, der das Torsignal zugeführt ist und in der bei Vorhandensein des Torsignals und bei Auftreten einer Signalflanke des asynchronen Datenstroms das Triggersignal generierbar ist.

Vorteilhafte Ausgestaltungen der Erfindung sind jeweils in den abhängigen Ansprüchen angegeben.

Weitere Vorteile sowie Einzelheiten der vorliegenden Erfindung ergeben sich aus der nachfolgenden Beschreibung anhand der Figuren.

### KURZE BESCHREIBUNG DER ZEICHNUNGEN

Es zeigt
- Figur 1: ein Blockdiagramm einer erfindungsgemäßen Positionsmesseinrichtung,
- Figur 2: ein vereinfachtes Signaldiagramm zu Verdeutlichung der Funktion der Positionsmesseinrichtung nach Figur 1,
- Figur 3: ein Blockdiagramm einer weiteren Ausführungsform einer erfindungsgemäßen Positionsmesseinrichtung und
- Figur 4: ein vereinfachtes Signaldiagramm zu Verdeutlichung der Funktion der Positionsmesseinrichtung nach Figur 3.

### BESCHREIBUNG DER AUSFÜHRUNGSFORMEN

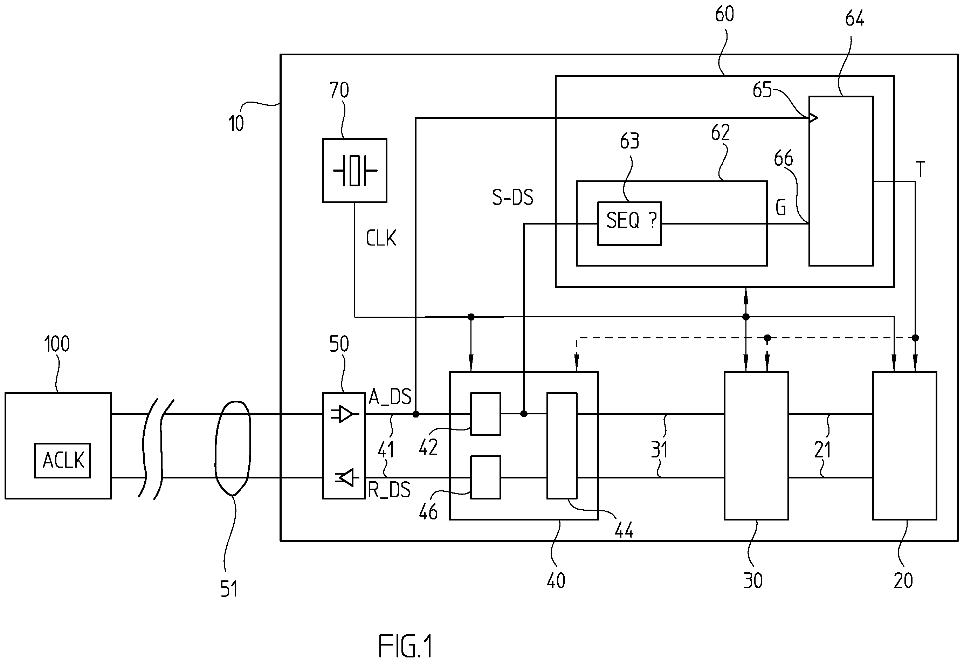

Figur 1 zeigt ein Blockdiagramm einer erfindungsgemäßen Positionsmesseinrichtung 10. Zentrale Funktionseinheiten der Positionsmesseinrichtung 10 sind eine Positionserfassungseinheit 20 und eine Verarbeitungseinheit 30. Die Positionserfassungseinheit 20 ist geeignet ausgestaltet, um digitale Positionswerte zu erzeugen. Sie umfasst hierzu beispielsweise eine Maßverkörperung mit einer Messteilung, eine Abtasteinheit für deren Abtastung, sowie eine Signalverarbeitungselektronik zur Bildung des digitalen Positionswerts aus Abtastsignalen der Abtasteinheit, die durch die Abtastung der Messteilung generiert werden. Maßverkörperung und Abtasteinheit sind in bekannter Weise relativ zueinander beweglich angeordnet und mechanisch mit Maschinenteilen verbunden, deren Position zueinander gemessen werden soll. Handelt es sich bei der Positionsmesseinrichtung 10 um einen Drehgeber, mit dem die Winkelposition der Welle eines Elektromotors gemessen werden soll, so ist die Abtasteinheit (bzw. das Gehäuse des Drehgebers) beispielsweise an einem Motorgehäuse angebracht und eine Welle des Drehgebers, die mit der Maßverkörperung drehfest verbunden ist, ist über eine Wellenkupplung mit der zu messenden Motorwelle verbunden.

Das physikalische Abtastprinzip, das der Positionserfassungseinheit 20 zugrunde liegt, ist für die vorliegende Erfindung bedeutungslos. So kann es sich um ein optisches, magnetisches, kapazitives oder induktives Abtastprinzip handeln. Entsprechend den notwendigen Verarbeitungsschritten, die erforderlich sind, um die Abtastsignale der Abtasteinheit zu Positionswerten zu verarbeiten, umfasst die Signalverarbeitungselektronik Funktionseinheiten, die Verarbeitungsschritte wie Verstärkung, Signalkorrektur (Offset-, Amplituden-, Phasenkorrektur), Interpolation, Zählung von Teilungsperioden, A/D-Wandlung,... ausführen.

Für die Übertragung von Steuersignalen und/oder Daten zwischen der Positionserfassungseinheit 20 und der Verarbeitungseinheit 30 sind Signalleitungen 21 vorgesehen. Die Signalleitungen 21 dienen insbesondere dazu, die in der Positionserfassungseinheit 20 generierten Positionswerte zur Verarbeitungseinheit 30 zu übertragen.

In der Verarbeitungseinheit 30 werden die Positionswerte ggf. weiter verarbeitet um Ausgabedaten zu erhalten. Hierzu können Verarbeitungsschritte wie Skalierung, Änderung des Datenformats, Fehlerkorrektur,... erforderlich sein, die in der Verarbeitungseinheit 30 rein digital ausgeführt werden. Ausgabedaten können aber nicht nur Positionswerte, sondern auch Geschwindigkeits- oder Beschleunigungswerte sein, die in der Verarbeitungseinheit 30 aus mehreren, hintereinander erzeugten Positionswerten berechnet werden.

Um nun die Abläufe in der Positionserfassungseinheit 20 und der Verarbeitungseinheit 30 synchronisieren und in einem exakten zeitlichen Raster ablaufen lassen zu können, ist in der Positionsmesseinrichtung 10 ein Taktgenerator 70 vorgesehen, der ein Arbeitstaktsignal CLK erzeugt, das als Zeitbasis dient. Das Arbeitstaktsignal CLK ist der Positionserfassungseinheit 20 und der Verarbeitungseinheit 30 zugeführt.

In der Positionsmesseinrichtung 10 ist weiter eine Schnittstelleneinheit 40 angeordnet, mit der eine Kommunikation mit einer Folgeelektronik 100 ermöglicht wird. Insbesondere erfolgt über die Schnittstelleneinheit 40 die Übertragung der Ausgabedaten zur Folgeelektronik 100. Die Ausgabedaten werden der Schnittstelleneinheit 40 beispielsweise über Signalleitungen 31 von der Verarbeitungseinheit 30 oder der Positionserfassungseinheit 20 übermittelt. Die physikalische Verbindung zwischen der Schnittstelleneinheit 40 und der Folgeelektronik 100 wird hierbei über wenigstens eine Schnittstellenleitung 41 in der Positionsmesseinrichtung 10 und ein Schnittstellenkabel 51 hergestellt, zwischen denen häufig eine Sende-/Empfängereinheit 50 angeordnet ist, die zu sendende Signale, die in der Positionsmesseinrichtung 10 meist als massebezogene (single-ended) Signale vorliegen, in differentielle Signale, beispielsweise entsprechend dem weit verbreiteten RS-485-Standard, umwandelt und aus differentiellen Signalen, die von der Folgeelektronik 100 bei der Positionsmesseinrichtung 10 eintreffen, massebezogene Signale generiert. Die Schnittstellenleitung 41, das Schnittstellenkabel 51 und ggf. die Sende-/Empfängereinheit 50 bilden einen bidirektionalen Datenübertragungskanal.

Alternativ hierzu kann die Datenübertragung zwischen der Schnittstelleneinheit 40 und der Folgeelektronik 100 auch optisch erfolgen. In einer derartigen Variante wäre die Sende-/Empfängereinheit 50 beispielsweise als Wandlereinheit von elektrischen Signalen zu optischen Signalen (und umgekehrt) ausgeführt, das Schnittstellenkabel 51 wäre ein Lichtwellenleiter.

Der Schnittstelleneinheit 40 ist ebenfalls das Arbeitstaktsignal CLK zugeführt.

Lediglich der Vollständigkeit halber sei erwähnt, dass die Strom-/Spannungsversorgung der Positionsmesseinrichtung 10 ebenfalls über das Schnittstellenkabel 51 erfolgen kann und dass an der Positionsmesseinrichtung 10 zum Anschluss des Schnittstellenkabels 51 ein Steckverbinder oder Anschlussklemmen vorgesehen sein können.

Die Art und Weise, wie die Kommunikation zwischen Folgeelektronik 100 und Positionsmesseinrichtung 10 erfolgt, ist in einem Schnittstellenprotokoll festgelegt. Häufig kommt dabei ein sog. Frage-Antwort-Schema zum Einsatz, d.h. die Folgeelektronik 100 (Master) sendet einen Befehl, ggf. gefolgt von Daten, zur Positionsmesseinrichtung 10 (Slave), diese bearbeitet den Befehl und sendet ggf. angeforderte Daten zur Folgeelektronik 100. Befehle können allgemein Schreib- und/oder Lesebefehle sein, beispielsweise zum Beschreiben oder Auslesen von Speicherzellen in der Verarbeitungseinheit 30. Für die Anforderung eines Positionswerts als Ausgangsdatum zur Folgeelektronik 100 kann ein spezieller Positionsanforderungsbefehl vorgesehen sein.

Befehle und Daten werden in Form von Datenrahmen übertragen, die entsprechend den Definitionen des Datenübertragungsprotokolls aufgebaut sind. Im Folgenden sind einige typische Komponenten von Datenrahmen aufgelistet:

### Startsequenz (Preamble)

Die Startsequenz leitet die Übertragung eines Datenrahmens ein und dient dazu, der jeweils empfangenden Einheit zu signalisieren, dass Befehle und/oder Daten zu erwarten sind. Einfachste Form einer Startsequenz ist ein einzelnes Bit (Startbit), komplexere Startsequenzen können beispielsweise alternierende Folgen logischer High-/Low-Pegel oder/und Bitfolgen umfassen, anhand derer die Startsequenz eindeutig identifizierbar ist.

### Befehl

Befehle werden normalerweise nur vom Master (Folgeelektronik 100) zum Slave (Positionsmesseinrichtung 10) geschickt und signalisieren die Art des Zugriffs, z.B. Schreib- oder Lesezugriff. Befehle können eine definierte Länge haben, beispielsweise 8 Bit.

### Empfangsdaten

Empfangsdaten sind Daten, die vom Master (Folgeelektronik 100) zum Slave (Positionsmesseinrichtung 10) gesendet werden. Sie können auch Adressen umfassen, die bei einem Lesebefehl anzeigen, von welcher Speicheradresse Daten gelesen werden sollen, bzw. bei einem Schreibbefehl die Zieladresse von zu schreibenden Daten angeben.

### Sendedaten

Sendedaten sind (vom Master (Folgeelektronik 100) per Befehl angeforderte) Daten, die vom Slave (Positionsmesseinrichtung 10) zum Master (Folgeelektronik 100) übertragen werden. Insbesondere sind Sendedaten auch die in der Positionsmesseinrichtung 10 ermittelten Messwerte, z.B. Positionswerte.

### Endsequenz (Postamble)

Die Endsequenz schließt die Übertragung des Datenrahmens ab. Sie kann aus nur einem Bit (Stoppbit) oder einer definierten Bitfolge bestehen. Sie kann darüber hinaus auch weiterführende Daten enthalten, beispielsweise eine Prüfsumme (CRC), die aus den Dateninhalten des Datenrahmens errechnet wird und der jeweils empfangenden Einheit ermöglicht, Bitfehler in der Datenübertragung zu erkennen.

Zusätzlich, oder alternativ zur Prüfsumme in der Endsequenz können auch Empfangs- und/oder Sendedaten Prüfsummen enthalten.

Die physikalische Übertragung von Datenrahmen von der Folgeelektronik 100 zur Positionsmesseinrichtung 10 erfolgt in Form eines Datenstroms dessen Zeitverhalten von einem Schnittstellentaktsignal ACLK der Folgeelektronik 100 bestimmt wird. Das Schnittstellentaktsignal ACLK legt das zeitliche Raster fest, in dem Bits als kleinste zu übertragende Informationseinheiten des Datenstroms von der Folgeelektronik 100 zur Schnittstelleneinheit 40 der Positionsmesseinrichtung 10 übertragen werden. In der Gegenrichtung, also von der Positionsmesseinrichtung 10 zur Folgeelektronik 100 kann das zeitliche Raster der Datenübertragung beispielsweise aus dem Arbeitstaktsignal CLK abgeleitet sein. Die Kommunikation zwischen Positionsmesseinrichtung 10 und Folgeelektronik 100 kann in einem Zeitmultiplexverfahren über nur einen bidirektionalen Datenkanal erfolgen, es kann aber auch für jede Datenrichtung ein unidirektionaler Datenkanal vorgesehen sein.

Bei den folgenden Betrachtungen werden Vorgänge in der Positionsmesseinrichtung 10, die dem zeitlichen Raster des Arbeitstaktsignals CLK folgen, als "synchron" bezeichnet, während Vorgänge, denen das zeitliche Raster des Schnittstellentaktsignals ACLK zugrunde liegt, als "asynchron" bezeichnet werden.

Ein asynchroner Datenstrom A_DS, der von der Folgeelektronik 100 bei der Positionsmesseinrichtung 10 eintrifft, ist über die Schnittstellenleitung 41 einer Synchronisierungseinheit 42 in der Schnittstelleneinheit 40 zugeführt. Dort wird aus dem asynchronen Datenstrom A_DS durch Abtastung im zeitlichen Raster des Arbeitstaktsignals CLK ein synchroner Datenstrom S_DS generiert. In anderen Worten ausgedrückt wird der asynchrone Datenstrom A_DS in das zeitliche Raster des Arbeitstaktsignals CLK überführt. Der Informationsgehalt des synchronen Datenstroms S_DS entspricht weiterhin dem des asynchronen Datenstroms A_DS.

Der synchrone Datenstrom S_DS ist einer Kommunikationseinheit 44 zugeführt, die ebenfalls in der Schnittstelleneinheit 40 angeordnet ist. Die Kommunikationseinheit 44 wertet den synchronen Datenstrom S_DS aus, d.h. sie entnimmt den Datenrahmen, die mit dem synchronen Datenstrom S_DS eintreffen, Befehle und ggf. Empfangsdaten und leitet sie an die jeweils adressierte(n) Einheit(en) (z.B. Positionserfassungseinheit 20, Verarbeitungseinheit 30,...) weiter. Darüber hinaus empfängt die Kommunikationseinheit 44, beispielsweise von der Positionserfassungseinheit 20 oder der Verarbeitungseinheit 30, Sendedaten, fügt sie in Datenrahmen ein und gibt sie an eine Ausgabeeinheit 46 der Schnittstelleneinheit 40 aus. Die Ausgabeeinheit sendet schließlich die auszugebenden Daten (beispielsweise in Form eines seriellen Antwortdatenstroms R_DS) über die Sende-/Empfängereinheit 50 zur Folgeelektronik 100.

Für die Erzeugung eines, aus der Sicht der Folgeelektronik 100, hochpräzisen Triggersignals T ist nun eine Triggereinheit 60 vorgesehen. Das Triggersignal T dient dazu, in der Messgeräteelektronik der Positionsmesseinrichtung 10 Ereignisse im zeitlichen Raster des Schnittstellentaktsignals ACLK und somit der Folgeelektronik 100 zu initiieren. Der Messgeräteelektronik kann beispielsweise die Positionserfassungseinheit 20, die Verarbeitungseinheit 30, oder die Schnittstelleneinheit 40 zugeordnet sein. Je nachdem, welches Ereignis initiiert werden soll, ist das Triggersignal T einer oder mehrerer Einheiten der Messgeräteelektronik zugeführt.

Der Triggereinheit 60 sind sowohl der asynchrone Datenstrom A_DS, als auch der synchrone Datenstrom S_DS zugeführt. Darüber hinaus kann der Triggereinheit 60 ebenfalls das Arbeitstaktsignal CLK zugeführt sein. In der Triggereinheit 60 wertet eine Auswerteeinheit 62 den synchronen Datenstrom S_DS dahingehend aus, dass bei Feststellung einer Freigabebedingung für die Ausgabe des Triggersignals T im synchronen Datenstrom S_DS ein Torsignal G erzeugt wird. Als Freigabebedingung dient in diesem Ausführungsbeispiel das Erkennen einer charakteristischen Bitfolge SEQ im synchronen Datenstrom S_DS. Hierfür umfasst die Auswerteeinheit 62 eine Vergleichereinheit 63, die die mit dem synchronen Datenstrom S_DS eintreffenden Daten mit der gesuchten charakteristischen Bitfolge SEQ vergleicht. Bei positivem Vergleichsergebnis gibt die Auswerteeinheit 62 das Torsignal G aus. Die charakteristische Bitfolge SEQ kann beispielsweise in der Startsequenz (Preamble) eines eintreffenden Datenrahmens enthalten sein. Das Torsignal G und der asynchrone Datenstrom A_DS sind einer Triggersignal-Ausgabeeinheit 64 zugeführt, die bei gleichzeitigem Vorhandensein des Torsignals G und dem Auftreten einer Signalflanke (eines Pegelwechsels) im asynchronen Datenstrom A_DS das Triggersignal T ausgibt. In einer sehr einfachen Ausführungsform kann die Triggersignal-Ausgabeeinheit 64 als logisches UND-Gatter ausgeführt sein.

Bei der Triggersignal-Ausgabeeinheit 64 kann es sich beispielsweise auch um ein flankengetriggertes Flip-Flop handeln. In diesem Fall weist die Triggersignal-Ausgabeeinheit 64 einen Takteingang 65 auf, dem der asynchrone Datenstrom A_DS zugeführt ist, sowie einen Freigabeeingang 66 für das Torsignal G. Die Triggersignal-Ausgabeeinheit 64 ist so ausgestaltet, dass ein aktives Torsignal G den Takteingang 65 freigibt und das Auftreten einer Signalflanke des asynchronen Datenstroms A_DS am Takteingang 65 bei gleichzeitigem Vorhandensein des Torsignals G die Ausgabe des asynchronen Triggersignals T bewirkt. Je nach Ausgestaltung des Takteingangs 65 kann entweder eine steigende oder eine fallende Signalflanke oder aber sowohl eine steigende als auch eine fallende Signalflanke die Ausgabe des asynchronen Triggersignals T bewirken.

Nach der Ausgabe des Triggersignals T können die Auswerteeinheit 62, sowie die Triggersignal-Ausgabeeinheit 64 wieder zurückgesetzt werden.

Es sei darauf hingewiesen, dass der auszuwertende Teil des Triggersignals T die Einschaltflanke (die einen Pegelwechsel anzeigt) ist und nicht der statische Pegel. Dementsprechend sind Einheiten, denen das Triggersignal T zugeführt ist und die gesteuert vom Triggersignal T Aktionen ausführen sollen, mit Vorteil flankengetriggert steuerbar.

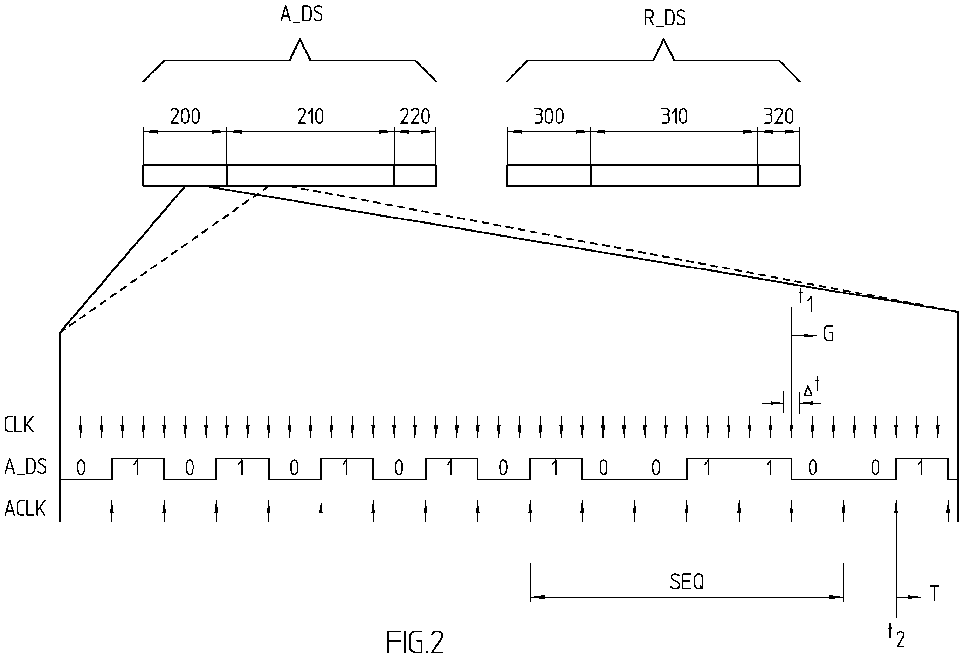

Figur 2 zeigt ein vereinfachtes Signaldiagramm, das die Funktion der anhand von Figur 1 beschriebenen erfindungsgemäßen Positionsmesseinrichtung verdeutlichen soll.

Im oberen Teil von Figur 2 sind zwei Datenrahmen dargestellt, die einen Kommunikationszyklus zwischen der Folgeelektronik 100 und der Positionsmesseinrichtung 10 symbolisieren. Zuerst schickt die Folgeelektronik 100 einen Datenrahmen mit einer Startsequenz 200 (Preamble), einem Befehls-/Datenblock 210 und einer Endsequenz 220 (Postamble) als asynchronen Datenstrom A_DS zur Positionsmesseinrichtung 10. Der Befehls-/Datenblock 210 enthält mindestens einen Befehl und kann optional auch Empfangsdaten enthalten. Nachdem die Positionsmesseinrichtung 10 den Befehl abgearbeitet hat, überträgt sie einen Datenrahmen mit einer Startsequenz 300, einem Datenblock 310 (mit Sendedaten) und einer Endsequenz 320 als Antwortdatenstrom R_DS zur Folgeelektronik 100. Wird also beispielsweise ein Positionswert angefordert, so umfasst der Befehls-/Datenblock 210 einen Positionsanforderungsbefehl und der Datenblock 310 einen Positionswert.

Im unteren Teil der Figur 2 ist ein Ausschnitt des asynchronen Datenstroms A_DS dargestellt, anhand dessen die Erzeugung des Triggersignals T detailliert beschrieben werden soll. Beispielhaft und keinesfalls einschränkend ist die zu identifizierende charakteristische Bitfolge SEQ in der Startsequenz 200 enthalten. Generell geeignet sind alle Bereiche des Datenpakets, die eindeutig identifizierbare Bitfolgen enthalten können. So ist durch gestrichelte Linien ein zweiter, alternativer Ausschnitt des asynchronen Datenstroms A_DS angedeutet, der eine charakteristische Bitfolge SEQ umfassen kann, nämlich im Bereich des Befehls-/Datenblocks 210. Diese Alternative ist dann besonders vorteilhaft, wenn die Erzeugung des Triggersignals T von einem bestimmten Befehl abhängig sein soll, der von der Folgeelektronik 100 zur Positionsmesseinrichtung 10 übertragen wird. In diesem Fall kann als charakteristische Bitfolge SEQ ganz oder teilweise die Bitfolge, die den Befehl kennzeichnet, gewählt werden.

Es ist prinzipiell auch möglich, dass die charakteristische Bitfolge SEQ in der Endsequenz 220 des Datenpakets enthalten ist. In dieser Variante muss gewährleistet sein, dass die charakteristische Bitfolge SEQ nicht zufällig im Befehls-/Datenblock 210 auftreten kann.

Die Pfeile unterhalb des dargestellten Ausschnitts des asynchronen Datenstroms A_DS repräsentieren die Zeitpunkte, an denen ein Bitwechsel stattfindet. Der zeitliche Abstand je zweier Pfeile (die Bitdauer) entspricht der Periodendauer des Schnittstellentaktsignals ACLK.

Die Pfeile oberhalb des dargestellten Ausschnitts des asynchronen Datenstroms A_DS repräsentieren die Abtastzeitpunkte, zu denen der asynchrone Datenstrom im zeitlichen Abstand der Periodendauer des Arbeitstaktsignals CLK abgetastet wird, um den synchronen Datenstrom S_DS (nicht dargestellt) zu erhalten. Um eine sichere Abtastung des asynchronen Datenstroms A_DS zu erreichen, weist das Arbeitstaktsignal CLK, wenigstens die doppelte Frequenz wie das Schnittstellentaktsignal ACLK auf. Jedes Bit des asynchronen Datenstroms A_DS wird in diesem Fall wenigstens zweimal abgetastet.

In der Praxis werden für die Abtastung des asynchronen Datenstroms A_DS bevorzugt noch höhere Frequenzen eingesetzt, beispielsweise die 4fache Frequenz des Arbeitstaktsignals CLK.

Betrachtet man den Abtastzeitpunkt t1, so wird deutlich, weshalb der synchrone Datenstrom S_DS für die Erzeugung eines präzisen Triggersignals T nicht geeignet ist. Je nach Phasenlage der Taktsignale CLK, ACLK kann sich nämlich der Zeitpunkt, zu dem der asynchrone Datenstrom A_DS abgetastet wird, um bis zu eine Taktperiode des Arbeitstaktsignals CLK verschieben. Es ergibt sich daher für die Erkennung eines Bitwechsels eine zeitliche Unsicherheit Δt. Nachdem die Taktsignale CLK, ACLK unabhängig voneinander erzeugt werden, wird sich in der Praxis ihre Phasenlage zueinander kontinuierlich ändern. Als Folge davon würde sich ein Triggersignal, das auf der Basis des mit Hilfe des Arbeitstaktsignals CLK generierten synchronen Datenstroms S_DS erzeugt wird, bezogen auf das zeitliche Raster des Schnittstellentaktsignals ACLK (das auch das zeitliche Raster der Regelkreise in der Folgeelektronik 100 bildet) ebenfalls um diese zeitliche Unsicherheit Δt verschieben, wobei diese Verschiebung oszillierendes oder sprunghaftes Verhalten zeigen kann. Bleibt man bei dem Beispiel, dass die Erfassung der Abtastwerte, die zu einem Positionswert verarbeitet werden, vom Triggersignal T gesteuert wird, so wird offensichtlich, dass jegliche zeitliche Unsicherheit Δt des Triggersignals T (und somit der Zeitpunkte der Messwerterfassung) die Qualität der Regelkreise einer Folgeelektronik sehr negativ beeinflussen kann. Dies gilt insbesondere bei hohen Vorschubgeschwindigkeiten und/oder hohen Anforderungen an die Positioniergenauigkeit.

Die charakteristische Bitfolge SEQ, die nun in diesem Beispiel identifiziert werden soll, ist "100110". Unter der Annahme, dass im dargestellten Fall zum Zeitpunkt t1 der logische 0-Pegel am Ende der charakteristischen Bitfolge SEQ bereits erkannt wird, gibt die Auswerteeinheit 62 nach dem Zeitpunkt t1 das Torsignal G an den Ereignisspeicher 64 aus. Damit wird der Takteingang 65 des Ereignisspeichers 64 freigeschaltet und das Eintreffen der nächsten (in diesem Beispiel steigenden) Signalflanke (die einen Bitwechsel signalisiert) des asynchronen Datenstroms A_DS bewirkt die Ausgabe des Triggersignals T. Auf diese Weise erfolgt die Ausgabe des Triggersignals T im zeitlichen Raster des Schnittstellentaktsignals ACLK und wird dadurch unabhängig von der Phasenlage der Taktsignale CLK, ACLK. Daraus wiederum folgt, dass die Wiederholbarkeit der Erzeugung des Triggersignals T nur noch von der Präzision des Schnittstellentaktsignals ACLK abhängt.

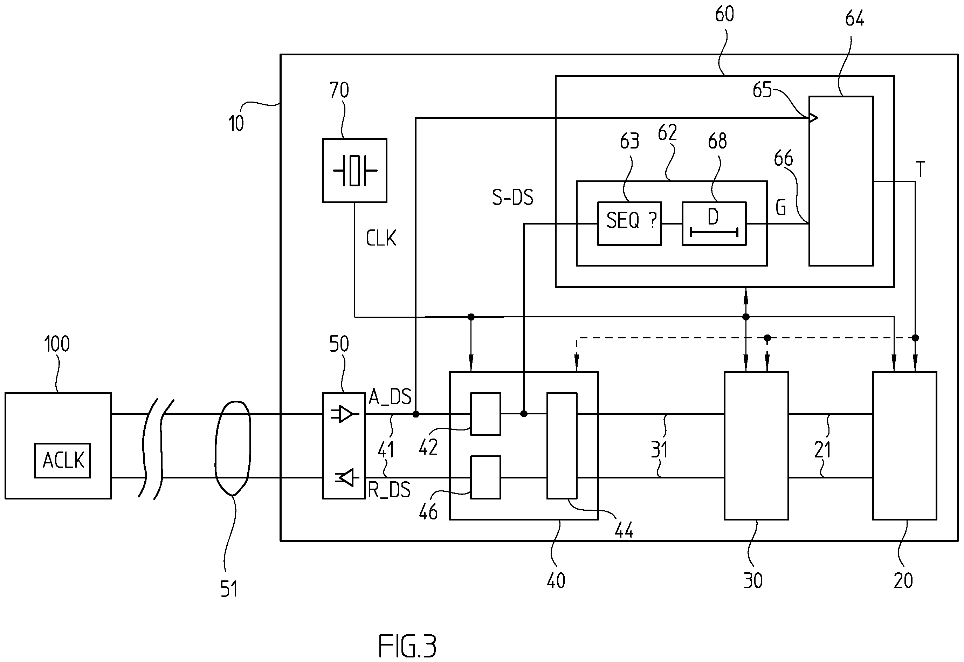

Figur 3 zeigt ein Blockdiagramm einer weiteren Ausführungsform einer erfindungsgemäßen Positionsmesseinrichtung. Alle Komponenten, die bereits in Verbindung mit dem ersten Ausführungsbeispiel anhand der Figur 1 beschrieben wurden, tragen das gleiche Bezugszeichen und werden nicht noch einmal ausführlich beschrieben.

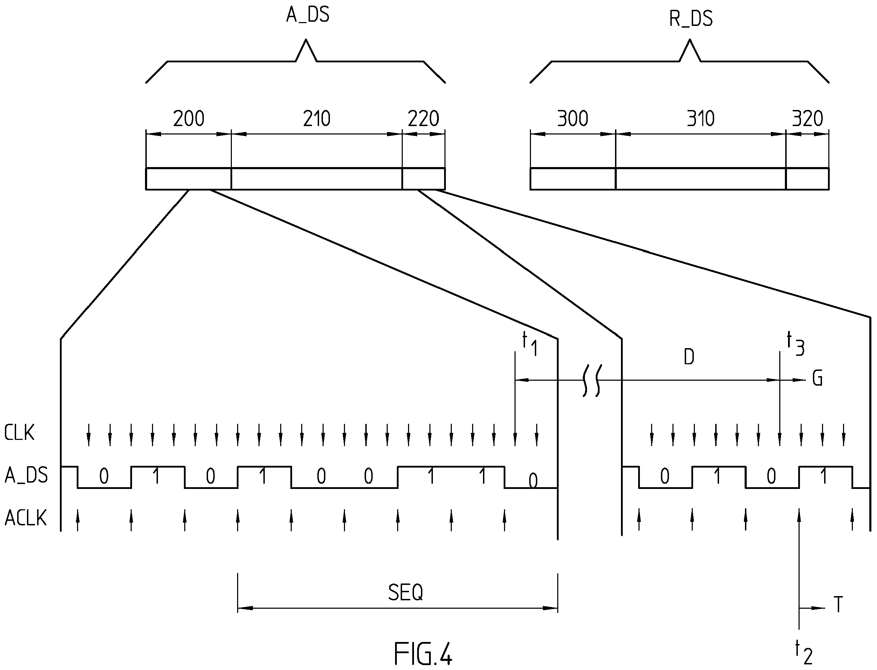

In diesem Ausführungsbeispiel umfasst die Auswerteeinheit 62 zusätzlich eine Verzögerungseinheit 68, mit der die Ausgabe des Torsignals G nach Erkennung der charakteristischen Bitfolge SEQ in der Vergleichereinheit 63 um den Betrag einer Verzögerungszeit D verzögert werden kann. Das ist dann besonders vorteilhaft, wenn das Triggersignal T zu einem Zeitpunkt erzeugt werden soll, dem keine charakteristische Bitfolge SEQ unmittelbar vorausgeht. Werden von der Folgeelektronik 100 Empfangsdaten mit unbestimmtem Inhalt zur Positionsmesseinrichtung 10 übertragen, so stellt sich darüber hinaus das Problem, dass die Empfangsdaten zufällig eine Bitfolge enthalten können, die der gesuchten charakteristischen Bitfolge SEQ entspricht. Soll also ein Triggersignal T nach einem Datenblock mit unbestimmten Inhalt ausgegeben werden (beispielsweise während der Übertragung der Endsequenz), ist es vorteilhaft, eine charakteristische Bitfolge SEQ zu detektieren, die vor dem Datenblock auftritt, beispielsweise also, wie unten anhand der Figur 4 gezeigt, in der Startsequenz 200, und die Ausgabe des Torsignals G mit Hilfe der Verzögerungszeit D geeignet zu verzögern.

Die Verzögerungseinheit 68 kann als Zähler ausgeführt sein, der nach dem Auftreten der charakteristischen Bitfolge SEQ erst nach einer definierten Anzahl von Taktperioden des Arbeitstaktsignals CLK (Verzögerungszeit D) das Torsignal G ausgibt. Die Verzögerungszeit D folgt somit dem zeitlichen Raster des Arbeitstaktsignals CLK. Als Freigabebedingung dient in diesem Ausführungsbeispiel das Erkennen der charakteristischen Bitfolge SEQ im synchronen Datenstrom S_DS und das Ablaufen der Verzögerungszeit D.

Figur 4 zeigt ein vereinfachtes Signaldiagramm, das die Funktion der anhand von Figur 3 beschriebenen erfindungsgemäßen Positionsmesseinrichtung verdeutlichen soll.

Analog zu Figur 2 sind im oberen Teil von Figur 4 zwei Datenrahmen dargestellt, die einen Kommunikationszyklus zwischen der Folgeelektronik 100 und der Positionsmesseinrichtung 10 symbolisieren. Ebenfalls analog zu Figur 2 ist die charakteristische Bitfolge SEQ, die identifiziert werden soll, "100110". Im unteren Teil der Figur 4 ist links ein Teil der Startsequenz 200 als Ausschnitt des asynchronen Datenstroms A_DS, der die charakteristische Bitfolge SEQ enthält, dargestellt. Rechts davon ist ein weiterer Ausschnitt des asynchronen Datenstroms A_DS dargestellt, der einen Teil der Endsequenz 220 zeigt.

Zum Zeitpunkt t1 ist die charakteristische Bitfolge SEQ eindeutig identifiziert. Anders als im vorhergehenden Beispiel gibt die Auswerteeinheit 62 das Torsignal G aber nicht sofort aus, sondern erst nach einer Verzögerungszeit D, die von der Verzögerungseinheit 68 vorgegeben wird. Wie bereits erwähnt, wird die Verzögerungszeit D in diesem Beispiel durch Zählen von Signalperioden des Arbeitstaktsignals CLK, also synchron ermittelt und folgt daher dem zeitlichen Raster des Arbeitstaktsignals CLK. Die Verzögerungszeit D ist so gewählt, dass das Torsignal G (zum Zeitpunkt t3) in der Endsequenz 220 des Datenpakets zum Freigabeeingang 66 der Triggereinheit 60 ausgegeben wird. Die darauffolgende Signalflanke (Pegelwechsel) des asynchronen Datenstroms A_DS zum Zeitpunkt t2 führt wiederum zur Ausgabe des Triggersignals T.

Um zu gewährleisten, dass das Triggersignal T immer an derselben Stelle des Datenrahmens (des asynchronen Datenstroms A_DS) erzeugt wird, muss auch die die Erzeugung des Triggersignals T auslösende Signalflanke zum Zeitpunkt t2 immer an derselben Stelle im Datenrahmen auftreten. In der Endsequenz 220 sind Signalflanken des Stoppbits oder einer die Endsequenz 220 kennzeichnenden Bitfolge besonders für die Erzeugung des Triggersignals T geeignet.

## Patentansprüche

1. Verfahren zum Erzeugen eines asynchronen Triggersignals (T) in einer Positionsmesseinrichtung (10), aufweisend eine Positionserfassungseinheit (20), eine Verarbeitungseinheit (30) und eine Schnittstelleneinheit (40), wobei die Positionsmesseinrichtung (10) über die Schnittstelleneinheit (40) und einen bidirektionalen Datenübertragungskanal (41, 50, 51) zum Zwecke der Kommunikation mit einer Folgeelektronik (100) verbindbar ist, mit folgenden Schritten:
• Generieren eines synchronen Datenstroms (S_DS) aus einem asynchronen Datenstrom (A_DS), der aus Richtung der Folgeelektronik (100) bei der Positionsmesseinrichtung (10) eintrifft, durch Abtastung des asynchronen Datenstroms (A_DS) im zeitlichen Raster eines Arbeitstaktsignals (CLK),
• Generieren eines Torsignals (G) bei Feststellung einer Freigabebedingung für die Ausgabe des Triggersignals (T) durch Auswertung des synchronen Datenstroms (S_DS) und
• Erzeugen des Triggersignals (T) bei Vorhandensein des Torsignals (G) und bei Auftreten einer Signalflanke des asynchronen Datenstroms (A_DS).

2. Verfahren nach Anspruch 1, wobei die Feststellung der Freigabebedingung das Erkennen einer charakteristischen Bitfolge (SEQ) im synchronen Datenstrom (S_DS) umfasst und die Freigabebedingung durch Vergleich des Inhalts des synchronen Datenstroms (S_DS) mit der charakteristischen Bitfolge (SEQ) festgestellt wird.

3. Verfahren nach Anspruch 2, wobei die Feststellung der Freigabebedingung weiter die Verzögerung der Ausgabe des Torsignals (G) nach Erkennung der charakteristischen Bitfolge (SEQ) um den Betrag einer Verzögerungszeit (D) umfasst und die Verzögerungszeit (D) dem zeitlichen Raster des Arbeitstaktsignals (CLK) folgt.

4. Verfahren nach einem der vorhergehenden Ansprüche, wobei im asynchronen Datenstrom (A_DS) Datenrahmen (200, 210, 220) übertragen werden und die charakteristische Bitfolge (SEQ) in einer Startsequenz (200) oder in einem Befehls-/Datenblock (210) des Datenrahmens (200, 210, 220) enthalten ist.

5. Verfahren nach Anspruch 4, wobei das Triggersignal (T) in einer Endsequenz (220) des Datenrahmens (200, 210, 220) ausgegeben wird.

6. Vorrichtung zum Erzeugen eines asynchronen Triggersignals (T) in einer Positionsmesseinrichtung (10), die eine Positionserfassungseinheit (20), eine Verarbeitungseinheit (30) und eine Schnittstelleneinheit (40) aufweist und die über die Schnittstelleneinheit (40) und einen bidirektionalen Datenübertragungskanal (41, 50, 51) zum Zwecke der Kommunikation mit einer Folgeelektronik (100) verbindbar ist, wobei die Vorrichtung eine Triggereinheit (60) umfasst, der
• ein asynchroner Datenstrom (A_DS) von der Folgeelektronik (100) und
• ein synchroner Datenstrom (S_DS), der in einer Synchronisierungseinheit (42) durch Abtastung des asynchronen Datenstroms (A_DS) im zeitlichen Raster eines Arbeitstaktsignals (CLK) generierbar ist,
zugeführt sind und die Triggereinheit (60)
• eine Auswerteeinheit (62), in der durch Auswertung des synchronen Datenstroms (S_DS) eine Freigabebedingung für die Ausgabe des Triggersignals (T) feststellbar und ein Torsignal (G) generierbar ist und
• eine Triggersignal-Ausgabeeinheit (64), der das Torsignal (G) zugeführt ist und in der bei Vorhandensein des Torsignals (G) und bei Auftreten einer Signalflanke des asynchronen Datenstroms (A_DS) das Triggersignal (T) generierbar ist,
aufweist.

7. Vorrichtung nach Anspruch 6, wobei die Freigabebedingung für die Ausgabe des Triggersignals (T) das Auftreten einer charakteristischen Bitfolge (SEQ) im synchronen Datenstrom (S_DS) ist und die Auswerteeinheit (62) eine Vergleichereinheit (63) umfasst, mit der der Inhalt des synchronen Datenstroms (S_DS) mit der charakteristischen Bitfolge (SEQ) vergleichbar und bei positivem Vergleichsergebnis das Torsignal (G) ausgebbar ist.

8. Vorrichtung nach Anspruch 7, wobei die Freigabebedingung für die Ausgabe des Triggersignals (T) weiter die Verzögerung der Ausgabe des Torsignals (G) nach der Erkennung der charakteristischen Bitfolge (SEQ) um eine Verzögerungszeit (D) umfasst und die Auswerteeinheit (62) weiter eine Verzögerungseinheit (68) umfasst, mit der die Ausgabe des Torsignals (G) nach der Erkennung der charakteristischen Bitfolge (SEQ) um den Betrag einer Verzögerungszeit (D) verzögerbar ist und die Verzögerungszeit (D) dem zeitlichen Raster des Arbeitstaktsignals (CLK) folgt.

9. Positionsmesseinrichtung nach einem der Ansprüche 6 bis 8, geeignet zur Durchführung eines Verfahrens nach einem der Ansprüche 1 bis 5.

## Claims

1. Method for generating an asynchronous trigger signal (T) in a position measuring device (10), having a position detection unit (20), a processor unit (30) and an interface unit (40), wherein the position measuring device (10) is connectable to sequent electronics (100) via the interface unit (40) and a bidirectional data transmission channel (41, 50, 51) for the purpose of communication, having the following steps:
• generating a synchronous data stream (S_DS) from an asynchronous data stream (A_DS), which arrives at the position measuring device (10) from the direction of the sequent electronics (100), by sampling the asynchronous data stream (A_DS) in the temporal framework of an operating clock signal (CLK),
• generating a gate signal (G) on determination of an enable condition for the output of the trigger signal (T) by evaluating the synchronous data stream (S_DS), and
• generating the trigger signal (T) when the gate signal (G) is present and when a signal edge of the asynchronous data stream (A_DS) occurs.

2. Method according to Claim 1, wherein the determination of the enable condition comprises the detecting of a characteristic bit sequence (SEQ) in the synchronous data stream (S_DS), and the enable condition is determined by comparing the content of the synchronous data stream (S_DS) with the characteristic bit sequence (SEQ).

3. Method according to Claim 2, wherein the determination of the enable condition further comprises the delay of the output of the gate signal (G) by the amount of a delay time (D) following detection of the characteristic bit sequence (SEQ), and the delay time (D) follows the temporal framework of the operating clock signal (CLK).

4. Method according to one of the preceding claims, wherein data frames (200, 210, 220) are transmitted in the asynchronous data stream (A_DS), and the characteristic bit sequence (SEQ) is included in a starting sequence (200) or in a command/data block (210) of the data frame (200, 210, 220).

5. Method according to Claim 4, wherein the trigger signal (T) is output in an end sequence (220) of the data frame (200, 210, 220).

6. Apparatus for generating an asynchronous trigger signal (T) in a position measuring device (10) that has a position detection unit (20), a processing unit (30) and an interface unit (40) and that is connectable to sequent electronics (100) via the interface unit (40) and a bidirectional data transmission channel (41, 50, 51) for the purpose of communication, wherein the apparatus comprises a trigger unit (60) that is supplied with
• an asynchronous data stream (A_DS) from the sequent electronics (100) and
• a synchronous data stream (S_DS), which is generable in a synchronization unit (42) by sampling the asynchronous data stream (A_DS) in the temporal framework of an operating clock signal (CLK),
and the trigger unit (60) has
• an evaluation unit (62), in which an enable condition for the output of the trigger signal (T) is determinable and a gate signal (G) is generable by evaluating the synchronous data stream (S_DS), and
• a trigger signal output unit (64), which is supplied with the gate signal (G) and in which the trigger signal (T) is generable when the gate signal (G) is present and when a signal edge of the asynchronous data stream (A_DS) occurs.

7. Apparatus according to Claim 6, wherein the enable condition for the output of the trigger signal (T) is the occurrence of a characteristic bit sequence (SEQ) in the synchronous data stream (S_DS), and the evaluation unit (62) comprises a comparison unit (63) by means of which the content of the synchronous data stream (S_DS) is comparable with the characteristic bit sequence (SEQ) and the gate signal (G) is outputable if the comparison result is positive.

8. Apparatus according to Claim 7, wherein the enable condition for the output of the trigger signal (T) further comprises the delay of the output of the gate signal (G) by a delay time (D) following the detection of the characteristic bit sequence (SEQ), and the evaluation unit (62) further comprises a delay unit (68) by means of which the output of the gate signal (G) is delayable by the amount of a delay time (D) following the detection of the characteristic bit sequence (SEQ), and the delay time (D) follows the temporal framework of the operating clock signal (CLK).

9. Position measuring device according to one of Claims 6 to 8, suitable for performing a method according to one of Claims 1 to 5.

## Revendications

1. Procédé pour générer un signal de déclenchement (T) asynchrone dans un dispositif de mesure de position (10), possédant une unité de détection de position (20), une unité de traitement (30) et une unité d'interface (40), le dispositif de mesure de position (10) pouvant être connecté à des fins de communication à une électronique en aval (100) par le biais de l'unité d'interface (40) et d'un canal de transmission de données (41, 50, 51) bidirectionnel, comprenant les étapes suivantes :
* génération d'un flux de données synchrone (S_DS) à partir d'un flux de données asynchrone (A_DS) qui parvient au dispositif de mesure de position (10) depuis la direction de l'électronique en aval (100), par échantillonnage du flux de données asynchrone (A_DS) dans la grille temporelle d'un signal d'horloge de travail (CLK),
* génération d'un signal de porte (G) en cas de constatation d'une condition de libération pour la délivrance du signal de déclenchement (T) par interprétation du flux de données synchrone (S_DS) et
* production du signal de déclenchement (T) en présence du signal de porte (G) et en cas de survenance d'un front de signal du flux de données asynchrone (A_DS) .

2. Procédé selon la revendication 1, la constatation de la condition de libération comprenant la reconnaissance d'une séquence binaire (SEQ) caractéristique dans le flux de données synchrone (S_DS) et la condition de libération étant constatée par comparaison du contenu du flux de données synchrone (S_DS) avec la séquence binaire (SEQ) caractéristique.

3. Procédé selon la revendication 2, la constatation de la condition de libération comprenant en outre le retard de la délivrance du signal de porte (G) après la reconnaissance de la séquence binaire (SEQ) caractéristique de la valeur d'un temps de retard (D) et le temps de retard (D) suivant la grille temporelle du signal d'horloge de travail (CLK).

4. Procédé selon l'une des revendications précédentes, des trames de données (200, 210, 220) étant transmises dans le flux de données asynchrone (A_DS) et la séquence binaire (SEQ) caractéristique étant contenue dans une séquence de départ (200) ou dans un bloc d'instructions/de données (210) de la trame de données (200, 210, 220).

5. Procédé selon la revendication 4, le signal de déclenchement (T) étant délivré dans une séquence de fin (220) de la trame de données (200, 210, 220).

6. Arrangement pour générer un signal de déclenchement (T) asynchrone dans un dispositif de mesure de position (10), lequel possède une unité de détection de position (20), une unité de traitement (30) et une unité d'interface (40) et qui peut être connecté à des fins de communication à une électronique en aval (100) par le biais de l'unité d'interface (40) et d'un canal de transmission de données (41, 50, 51) bidirectionnel, l'arrangement comprenant une unité de déclenchement (60) à laquelle
* un flux de données asynchrone (A_DS) provenant de l'électronique en aval (100) et
* un flux de données synchrone (S_DS), qui peut être généré dans une unité de synchronisation (42) par échantillonnage du flux de données asynchrone (A_DS) dans la grille temporelle d'un signal d'horloge de travail (CLK),
sont acheminés et l'unité de déclenchement (60) possédant
* une unité d'interprétation (62) dans laquelle peut être constatée une condition de libération pour la délivrance du signal de déclenchement (T) par interprétation du flux de données synchrone (S_DS) et un signal de porte (G) peut être généré et
* une unité de délivrance de signal de déclenchement (64), à laquelle est acheminé le signal de porte (G) et dans laquelle le signal de déclenchement (T) peut être généré en présence du signal de porte (G) et en cas de survenance d'un front de signal du flux de données asynchrone (A_DS).

7. Arrangement selon la revendication 6, la condition de libération pour la délivrance du signal de déclenchement (T) étant la survenance d'une séquence binaire (SEQ) caractéristique dans le flux de données synchrone (S_DS) et l'unité d'interprétation (62) comprenant une unité de comparaison (63) avec laquelle le contenu du flux de données synchrone (S_DS) peut être comparé avec la séquence binaire (SEQ) caractéristique et le signal de porte (G) peut être délivré en cas de résultat positif de la comparaison.

8. Arrangement selon la revendication 7, la condition de libération pour la délivrance du signal de déclenchement (T) comprenant en outre le retard de la délivrance du signal de porte (G) après la reconnaissance de la séquence binaire (SEQ) caractéristique d'un temps de retard (D) et l'unité d'interprétation (62) comprenant en outre une unité de retard (68) avec laquelle la délivrance du signal de porte (G) après la reconnaissance de la séquence binaire (SEQ) caractéristique peut être retardée de la valeur d'un temps de retard (D) et le temps de retard (D) suit la grille temporelle du signal d'horloge de travail (CLK)

9. Dispositif de mesure de position selon l'une des revendications 6 à 8, adapté pour mettre en œuvre un procédé selon l'une des revendications 1 à 5.
